# EUROPEAN PATENT SPECIFICATION

(11) **EP 1 647 808 B1**
(45) Date of publication and mention of the grant of the patent: **07.01.2009**
(21) Application number: 05022449.2
(22) Date of filing: 14.10.2005
(51) Int. Cl.: G01D 5/14, G01D 3/08

(54) **Controller and astride riding type vehicle**
Regler und im Grätschsitz zu benutzendes Fahrzeug
Régulateur et véhicule de type monté à califourchon

(30) Priority: 14.10.2004 JP 2004299518
(43) Date of publication of application: 19.04.2006
(73) Proprietor: Yamaha Hatsudoki Kabushiki Kaisha, Iwata-shi, Shizuoka-ken (JP)
(72) Inventor: Hino, Haruyoshi, Iwata-shi Shizuoka-ken (JP); Murota, Keiko, Iwata-shi Shizuoka-ken (JP); Shirazawa, Hideki, Iwata-shi Shizuoka-ken (JP); Terada, Junji, Iwata-shi Shizuoka-ken (JP); Ono, Tomohiro, Iwata-shi Shizuoka-ken (JP)
(74) Representative: Grünecker, Kinkeldey, Stockmair & Schwanhäusser Anwaltssozietät

(56) References cited:
- EP-A- 0 871 011
- EP-A- 1 464 571
- US-B1- 6 400 141

## Description

The present invention relates to a controller according to the preamble portion of claim 1, and in particular to a relative position detection-and- control device in which a first member and a second member are displaced relative to each other so that a control signal corresponding to the amount of displacement can be outputted to an object to be controlled. It further relates to an astride riding type vehicle to which such a controller is mounted, and in particular to an astride riding type vehicle in which accelerator opening is controlled by such a relative position detection-and-control device.

Such a controller is known from EP 1 464 571. From EP 1 464 571, there is known an electronic throttle control device mounted on a handlebar of a motorcycle, wherein the position of the twist grip between an idle position and a full throttle position is determined by means of a sensor unit. This sensor unit comprises a two-part housing, which accommodates a Hall-effect sensor. Said Hall-effect sensor has a stator and a rotor rotatable relative to each other. The stator comprises two separate stator elements consisting of magnetic conducting material, wherein these stator elements are forming a ring, and wherein air gaps are provided between these stator elements. Hall effect ASIC's are provided in these gaps. Further, different possibilities of combining the output signals from these two Hall-effect sensors are disclosed being based on software and correction units integrated into the ASIC's. According to one of the "combining methods", the voltage U1 of the first Hall-effect sensor is converted into a switching signal, with which a trigger signal is generated for the voltage U2 of the second Hall-effect sensor.

Hitherto, there have been, as relative position detection-and-control devices for various objects to be controlled, many systems in which a first and a second member are provided capable of relative displacement and these first and second members are displaced relative to each other so that the object is controlled in response to the amount of displacement.

For example, in astride riding type vehicles such as motorcycles using internal combustion engines, an accelerator grip (accelerator) is mounted on a handlebar for rotation and the accelerator is rotated with respect to the handlebar for the opening/closing control of a throttle valve of the internal combustion engine (engine).

In such astride riding type vehicles, an electric relative position detection-and-control device has been known in which the rotational operation of the accelerator is detected by a potentiometer and the throttle valve is opened/closed by an actuator based on the output voltage.

In the electric relative position detection-and-control device, in order to prevent an accident that the rotational operation of the accelerator does not correspond to the opening/closing movement of the throttle valve as a result of malfunction of the potentiometer or the like, besides the potentiometer, a mechanical completely-closed switch is provided capable of detecting a completely-closed position of the accelerator so as to close the throttle valve.

A system equipped with a magnetic relative position detection-and-control device has been known in which a magnet is disposed in an accelerator and the rotational position of the accelerator is detected using change in the magnetic flux density, and a system using a Hall IC has also been proposed.

For example, in JP-A-Hei 7-324637, for the purpose of detecting the rotational position of the accelerator so as to control ignition of the internal combustion engine, a magnet is fixed to an accelerator, two digital Hall ICs are fixed to the handle and it is judged in which one of idling, middle-speed and high speed ranges the opening range of the accelerator is included. In this case, detection of the amount of rotation of the accelerator necessary for the opening/closing control of the throttle valve, must be performed using a potentiometer or the like.

Further, in Fig. 6 of JP-A-2002-256904 is disclosed a relative position detection-and-control device in which a permanent magnet is fixed to an accelerator and two Hall ICs having the same function are fixed to a housing fastened to a handle shaft. In this case, although details are not clear, an electric signal is outputted in response to the position of the permanent magnet during rotation of the accelerator, using two Hall ICs having the same function.

However, since in a relative position detection-and-control device using a conventional potentiometer, the potentiometer is larger than an accelerator, external appearance is likely to become poorer if it is disposed around the accelerator. Therefore, it must be disposed at a position other than that around the accelerator and connected to the accelerator with a wire cable or the like, which is likely to increase the number of parts, human-hours for assembling and the like. In addition, since a potentiometer larger than an accelerator is disposed, as well as a wire cable or the like, it is difficult to improve the quality of external appearance around the accelerator and further, since the wire cable or the like is subjected to change in shape such as elongation over time, adjustment of its length is necessary, posing a maintenance problem.

Further, since in a conventional relative position detection-and-control device utilizing a magnetic property, no measures are studied to prevent an accident that the rotational operation of the accelerator does not correspond to the opening/closing movement of the throttle valve, a mechanical switch used in the conventional system must be provided, resulting in a problem that prevention of malfunction is difficult. Additionally, the mechanical switch has a contact section, which might lead to a cost increase due to development of wear, necessity of securing reliability and the like.

In view of the foregoing, an object of the present invention is to provide a controller capable of preventing malfunction easily and being constructed compactly at a low cost.

This objective is solved in an inventive manner by a controller having the feature combination of claim 1.

Preferably the first member has at least one magnetic substance fixed thereto for generating a continuous magnetic field for detection, wherein the second member has the detection section fixed thereto for detecting a flux density of the magnetic field formed by the magnetic substance to output the detection signal, for outputting a control signal from a control section based on the detection signal at a relative position of the first member to the second member.

Still further, preferably the detection section is provided with first and second Hall effect sensors as first and second magnetic field property sensors, which are fixed in the magnetic field for detection in a non-contact relation with the magnetic substance.

Therein, preferably the first Hall effect sensor is a digital Hall IC.

According to a preferred embodiment, the magnetic substance is configured such that an N-pole and an S-pole are disposed side by side in the direction in which the first member and the second member are displaced relative to each other.

According to another preferred embodiment, the first member and the second member are displaced relative to each other between the reference position and a maximum displacement position.

According to yet another preferred embodiment, the magnetic substance and the second Hall effect sensor are fixed to the first member and the second member such that the second Hall effect sensor is disposed within a range in which the flux density of the magnetic field for detection changes monotonously.

According to still another preferred embodiment, the controller comprises a magnetic metal plate disposed separate from and opposite the magnetic substance, wherein the first Hall effect sensor and the second Hall effect sensor are disposed between the magnetic metal plate and the magnetic substance.

Another object of the present invention is to provide an astride riding type vehicle as indicated above in which a malfunction scarcely happens during control of a drive source, the number of parts, human-hours for assembling and the like can be kept small and the quality of external appearance around an accelerator can be improved easily.

This objective is solved in an inventive manner by an astride riding type vehicle to which the controller as indicated above is mounted for the control of accelerator opening, wherein one of the magnetic substance and the detection section is fixed to a handlebar and the other to an accelerator grip mounted for rotation about the handlebar, and the controller is mounted in such a manner that a completely-closed position of the accelerator grip is defined as the reference position.

Alternatively, this objective is solved in an inventive manner by an astride riding type vehicle to which the controller as indicated above is mounted for the control of accelerator opening, wherein the detection section is fixed to a handlebar, the magnetic substance is formed integral with a tube guide section of an accelerator grip mounted on the handlebar for rotation, and the relative position detection-and-control device is mounted in such a manner that a completely-closed position of the accelerator grip is defined as the reference position.

In the following, the present invention is explained in greater detail with respect to several embodiments thereof in conjunction with the accompanying drawings, wherein:
- Fig. 1: is a plan view, partly in section, of a controller (a relative position detection-and-control device) of an embodiment, with the device being mounted to an accelerator;
- Fig. 2: is a sectional view, taken along line A―A of Fig. 1, of the controller (the relative position detection-and-control device) of the present embodiment, with the device being mounted to the accelerator;
- Fig. 3: shows the accelerator of the present embodiment, in which (a) is a longitudinal sectional view and (b) is a sectional view taken along line B-B of (a);
- Fig. 4: is a perspective view of a split housing of the present embodiment;
- Fig. 5: is a plan view of a detection section of the present embodiment;
- Fig. 6: is a sectional view, showing the positional relation between the end portion of the accelerator and the detection section of the present embodiment; and
- Fig. 7: are graphs, in which (a) shows change in flux density at the position of a digital Hall IC of this embodiment, (b) showing change of a first detection signal, (c) shows change in flux density at the position of a linear Hall IC, and (d) shows change of a second detection signal.

### Now, an embodiment is described below:

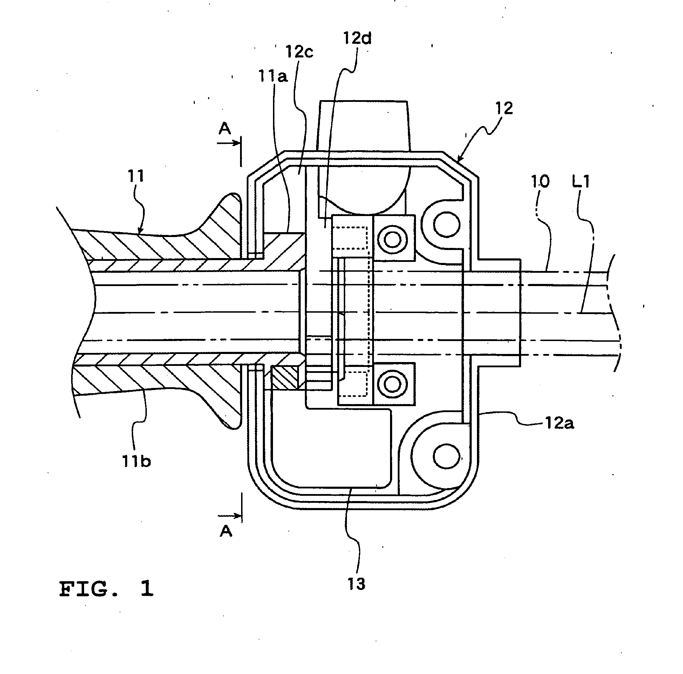

Fig. 1 to Fig. 7 show an example in which the relative position detection-and-control device (the controller) according to this embodiment is applied to an accelerator section of a motorcycle as an astride riding type vehicle.

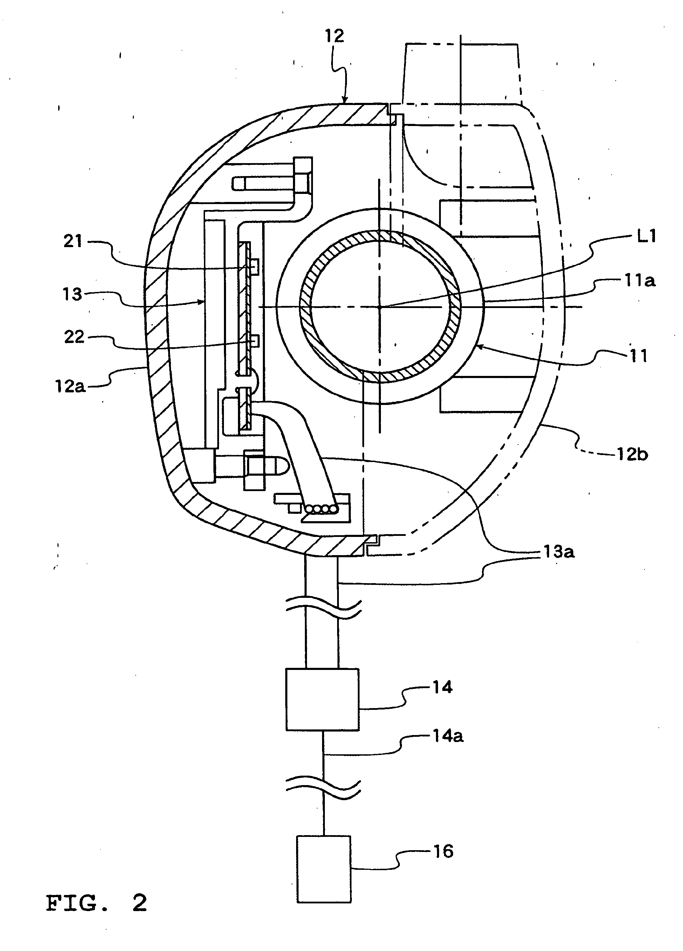

The relative position detection-and-control device has an accelerator grip (accelerator) 11 as a first member mounted for rotation on a handlebar 10 near one end thereof, and a housing 12 as a second member fixed to the handlebar 10 at a position corresponding to a tube guide section 11 a located laterally inwardly of the accelerator 11, as shown in Fig. 1 and Fig. 2. The tube guide section 11 a of the accelerator 11 is housed in the housing 12 for rotation relative thereto.

Inside the housing 12, a detection section 13 for detecting opening of the accelerator 11 is disposed opposite the tube guide section 11 a of the accelerator 11, wires 13a for the detection signal extending from the detection section 13 are connected to a control section 14 provided on a vehicle body (not shown), and a wire 14a for the control signal, extending from the control section 14, is connected to a controller 16 for operating a power source (not shown).

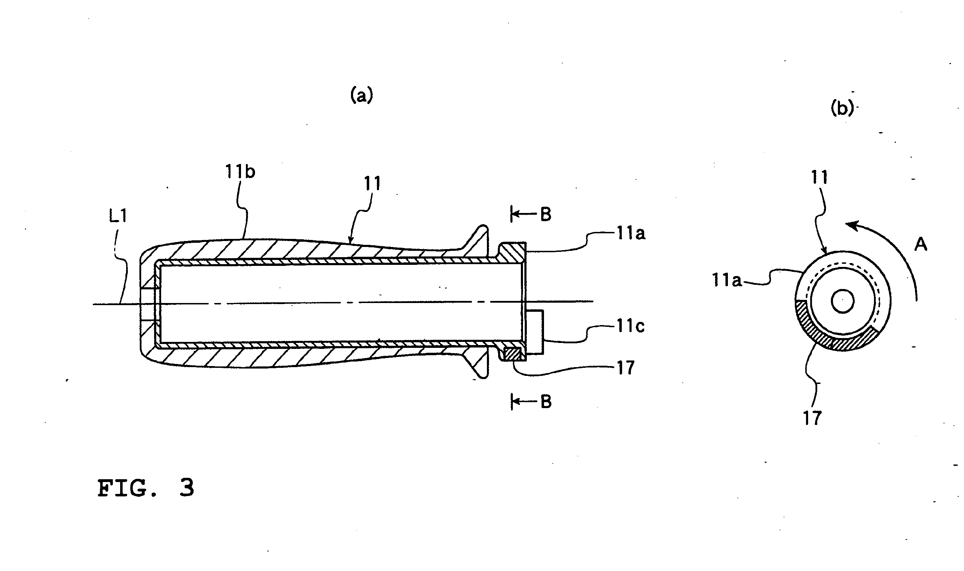

The accelerator 11 of the relative position detection-and-control device comprises the tube guide section 11 a disposed inside the housing 12, and a grip section 11 b disposed outside the housing 12, as shown in Fig. 3. The tube guide section 11 a has a rotation restriction section 11 c for restricting rotation of the accelerator 11, and a permanent magnet 17 as a magnetic substance that is shaped in an arc with its arc center on a rotational axis L1 of the accelerator 11 and embedded in the tube guide section 11a of the accelerator 11.

On the other hand, the housing 12, as shown in Fig. 1 and Fig. 2, includes a pair of split housings 12a, 12b to fixedly sandwich the handlebar 10 diametrically therebetween, and the tube guide section 11 a of the accelerator 11 is rotationally held between the split housings 12a, 12b.

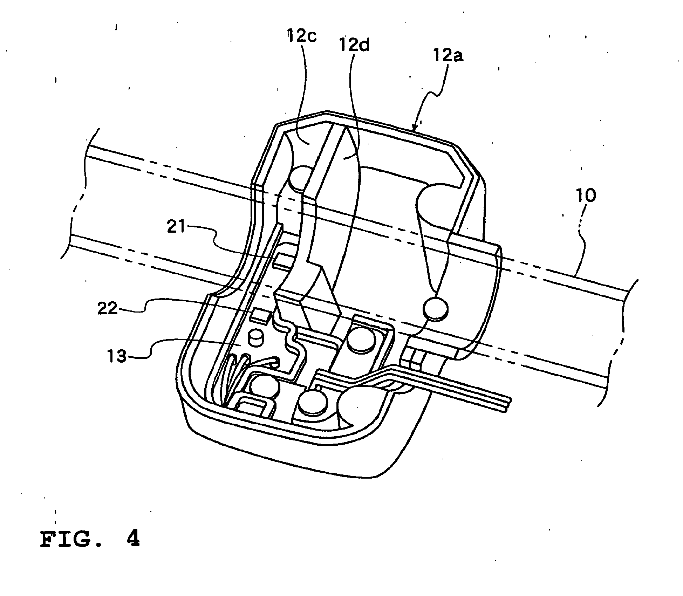

Inside the split housing 12a, as shown in Fig. 1 and Fig. 4, a container section 12c to contain the tube guide section 11 a of the accelerator 11 is defined by a rib-like projection piece 12d. The projection piece 12d is provided in a given positional relation with the rotation restriction section 11 c on the tube guide section 11 a of the accelerator 11 and arranged such that when it comes in abutment against the projection section 12d, the accelerator 11 is restricted of its rotation but is rotational between the completely-closed state and the fully-open state.

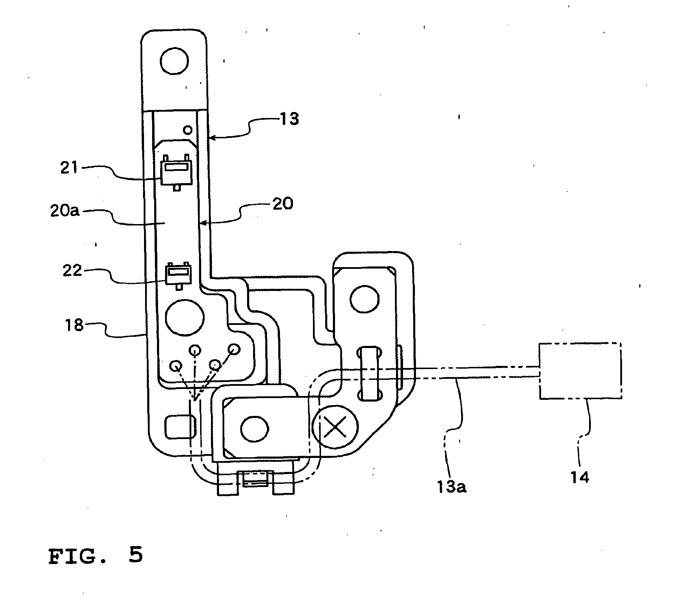

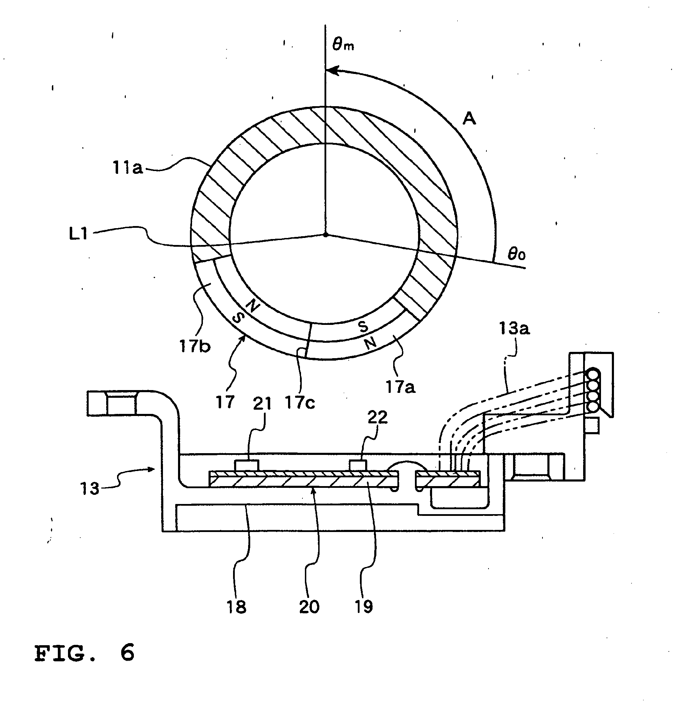

In the housing section 12c of the split housing 12a and in the vicinity thereof is fixed the detection section 13 for detecting the flux density of the magnetic field for detection formed by the permanent magnet 17 in the tube guide section 11 a of the accelerator 11. The detection section 13 is configured, as shown in Fig. 5 and Fig. 6, such that a flat plate-like circuit board 20 is supported on a circuit board holder 18 fixed to the split housing 12a, and in the circuit board 20 is embedded a magnetic metal plate 19 made of iron plate or the like. The circuit board itself may be made of iron, or an iron plate may be provided under the circuit board.

The circuit board 20 has a narrow section 20a to be disposed in the housing section 12c of the split housing 12a, as shown in Fig. 5, and on the narrow section 20a, a Hall IC 21 as a first Hall IC and a linear Hall IC 22 as a second Hall IC are mounted opposite to each other in a spaced relation from the permanent magnet 17.

Now, the circuit board 20 being combined with the tube guide section 11a of the accelerator 11 is described, referring to Fig. 6. The permanent magnet 17 in the tube guide section 11 a of the accelerator 11 is formed of two magnetic pole sections 17a, 17b fixed adjacent to each other in the rotating direction of the accelerator 11. The magnetic pole section 17a that is disposed forwardly in the direction "A" indicating the movement from the side of completely-closed state toward the side of fully-open state, has an S-pole at the inner side and an N-pole at the outer side, and the magnetic pole section 17b which is disposed rearward in the direction "A", has an S-pole on the outer side and an N-pole in the inner side. Therefore, the permanent magnet 17 is configured such that the N-pole and the S-pole disposed in the outer sides of the magnetic pole sections 17a, 17b in the direction "A" indicating the movement from the side of the completely-closed state toward the side of the fully-open state, are disposed side by side.

On the other hand, the digital Hall IC 21 and the linear Hall IC 22, in the circuit board 20, are disposed in the direction perpendicular to the rotation axis L1 of the accelerator 11, that is, in the rotating direction of the accelerator 11 at a given distance away from each other.

Of these Hall ICs, the digital Hall IC 21 is, as shown in Fig. 6, at a position corresponding to a boundary section 17c between the N-pole and the S-pole in the circumferential direction of the permanent magnet 17 when the accelerator 11 is in a completely-closed stateθ0. The accelerator 11 has a play around the position of the completely-closed state θ0 and specifically, it is at a position corresponding to that in the vicinity of the boundary section 17c and a little toward the N-pole.

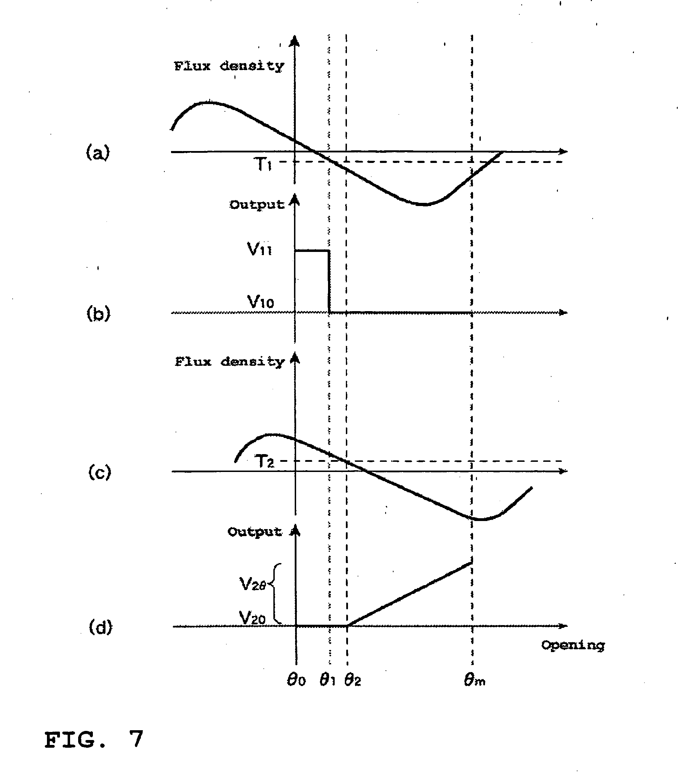

When the accelerator 11 is rotated from the completely-closed state θ0 to the fully-open state θm, the flux density at the position of the digital Hall IC 21 changes as shown in Fig. 7(a) so as to decrease gradually from a position at the N-pole side in which the flux density is low, and increases gradually after passing a position of an extreme density value.

Further, regarding a first detection signal from the digital Hall IC 21, a voltage V11 is outputted when the flux density at the position is not smaller than a given threshold T1, and a voltage V10 is outputted when the flux density is smaller than the given threshold T1. Here, the voltage V10 is zero volt.

The linear Hall IC 22, as shown in Fig. 6, is at a position facing the N-pole of the permanent magnet 17 when the accelerator 11 is in the completely-closed state θ0 and specifically, at a position facing the N-pole disposed in the direction "A" indicating the movement toward the completely-closed state.

When the accelerator 11 is rotated from the completely-closed state θ0 to the fully-open state θm, the flux density at the position of the linear Hall IC 22 changes within the range of a monotonous change from a position of higher density on the N-pole side, as shown in Fig. 7(c). The range of the monotonous change of the flux density is a range from the completely-closed state θ0 to the fully-open state θm, or a range in which the flux density detected when the accelerator 11 is displaced from the fully-open state θm to the completely-closed state θ0 increases or decreases without passing the position of an extreme value, and here, it is defined as a range in which the flux density decreases monotonously.

Further, regarding a second detection signal from the linear Hall IC 22, a voltage V20 is outputted when the flux density at the position is not smaller than a given threshold T2 and a voltage V2θ corresponding to the flux density is outputted in inversely proportional to the flux density when the flux density is smaller than the given threshold T2. Here, the voltage V20 is zero volt.

The control section 14 to which are transmitted these outputs of the digital Hall IC 21 and the linear Hall IC 22, is arranged such that, when the output from the digital Hall IC 21 is V11, it outputs to the controller 16 a control signal to set a drive source (not shown) to a low speed operating condition, and when the output from the digital Hall IC 21 is not V11 but V10, it outputs to the controller 16 a control signal corresponding to the output of the linear Hall IC 22, enabling the drive source (not shown) to be operated to correspond to the output of the linear Hall IC 22.

Now, a method of operating the controller 16 through the accelerator 11 is described in a motorcycle equipped with a relative position detection-and-control device having the foregoing construction.

Firstly, between the completely-closed state θ0 as a reference position and a given opening θ1, the flux density at the position of the digital Hall IC 21 is not smaller than a threshold T1, as shown in Fig. 7(a). The first detection signal V11 indicative of the completely-closed state θ0 is therefore outputted from the digital Hall IC 21, as shown in Fig. 7(b). At this time, since the flux density at the position of the linear Hall IC 22 is not smaller than a threshold T2, as shown in Fig. 7(c), the second detection signal V20 corresponding to the completely-closed state θ0 is outputted from the linear Hall IC 22, as shown in Fig. 7(d). These outputs from the digital Hall IC 21 and the linear Hall IC 22 are transmitted to the control section 14 through the wires 13a for the detection signal, and a control signal to stop power supply to the motor is transmitted to the controller 16 from the control section 14 through the wire 14a for the control signal.

Secondly, when the accelerator 11 is rotated a little in the direction "A" to cause the opening to be larger than a given opening θ1, the flux density at the position of the digital Hall IC 21 becomes larger than a given threshold T1 and the first detection signal V10 is outputted. At this time, in this embodiment, the flux density at the position of the linear Hall IC 22 is larger than a given threshold T2, a condition is maintained in which the second detection signal V20 is outputted from the linear Hall IC 22. Therefore, the control signal from the control section 14 to stop power supply to the motor is maintained.

Then, since when the accelerator 11 is rotated further in the direction "A" and the opening becomes larger than a given opening θ2, the flux density at the position of the linear Hall IC 22 becomes smaller than T2, a condition is maintained in which the first detection signal V10 is outputted from the digital Hall IC 21, while a second detection signal V2θ corresponding to change in flux density is outputted from the linear Hall IC 22 and transmitted to the control section 14 through the wires 13a for the detection signal. Therefore, a control signal corresponding to the second detection signal V2θ is outputted to the controller 16 and the drive source is controlled to correspond to the second detection signal V2θ.

Further, when the accelerator 11 is set to a full-open state, the flux density at the position of the digital Hall IC 21 is smaller than a given threshold T1. A condition is therefore maintained in which the first detection signal V10 is outputted, and the drive source is set to a fully-open state to correspond to the second detection signal V2θ from the linear Hall IC 22.

On the other hand, when the accelerator 11 is rotated opposite to the direction "A," the accelerator opening in a range larger than the opening θ2 is operated to correspond to the second detection signal V2θ from the linear Hall IC 22 and in an opening range smaller than the opening θ2, power supply to the motor is shut down.

According to the motorcycle using the relative position detection-and-control device as described above, in the condition in which the first detection signal V11 indicative of the completely-closed position is outputted from the digital Hall IC 21, the control section 14 can output a control signal corresponding to the completely-closed position and in the condition in which the first detection signal V10 indicative of the opening state of the accelerator 11 is outputted from the digital Hall IC 21, the control section 14 can output a control signal corresponding to the second detection signal V2θ from the linear Hall IC 22. Therefore, in the condition in which the accelerator 11 is positioned at a completely-closed position with respect to the housing 12, if the first detection signal V10 indicative of the opening state of the accelerator 11 is outputted instead of the first detection signal V11 indicative of the completely-closed state being outputted from the digital Hall IC 21 as a result of malfunction or the like, the second detection signal V20 indicative of the completely-closed state has been outputted from the linear Hall IC 22, so that the control section 14 outputs a control signal corresponding to the completely-closed state in which power supply is stopped.

If the linear Hall IC 22 outputs the second detection signal V2θ indicative of the opening state of the accelerator 11 as a result of malfunction or the like, a first detection signal V11 indicative of the completely-closed state has been outputted from the digital Hall IC, so that a control signal corresponding to the completely-closed state in which power supply is stopped, is outputted from the control section 14.

Thus, even if these malfunctions may occur, no control signal based on the malfunction or the like is outputted to the controller 16 as a drive source, enabling prevention of malfunction of the drive source.

In addition, if the permanent magnet 17 is fixed to the accelerator 11, and the digital Hall IC 21 and the linear Hall IC 22 are fixed, in a non-contact relation with the permanent magnet 17, in the magnetic field for the detection of the permanent magnet 17 in the housing 12 fixed to the handlebar 10, independent two detection signals can be obtained and a control signal can be outputted from the control section 14 through these detection signals, so that no potentiometer or the like used in a conventional control system is required and a relative position detection-and-control device capable of easily preventing malfunction of a drive source can be constructed compactly at a low cost, enabling its easy installation around the accelerator grip.

Further, compared with when a potentiometer is used as in a conventional system, no member such as a potentiometer having a shape larger than that of the accelerator 11 is required and wires or the like for connecting the accelerator 11 and the potentiometer are unnecessary, so that the quality of external appearance can be improved easily, the number of parts and human-hours for assembling can be kept small and because of lack of mechanical parts, no consideration for deterioration over time is necessary.

Further, since the linear Hall IC 22 is located within a range in which the flux density of the magnetic field for detection changes monotonously, a second detection signal V2θ changing monotonously can be produced easily by rotating the accelerator 11 and a control signal corresponding to the opening of the accelerator 11 can be outputted easily from the control section 14.

Moreover, since the N-pole and the S-pole of the permanent magnet 17 are arranged disposed side by side in the direction "A" in which the accelerator 11 is rotated with respect to the housing 12, change of the direction of the magnetic line becomes large near the boundary section 17c between the N-pole and the S-pole, and this position can be detected as a completely-closed position easily by the digital Hall IC 21.

Further, since a magnetic metal plate 19 disposed separate from and facing the permanent magnet 17, is embedded in the circuit board 20, and the digital Hall IC 21 and the linear Hall IC 22 are disposed between the metal plate 19 and the permanent magnet 17, the flux of the magnetic field for detection formed by the permanent magnet 17 can be collected toward the metal plate 19 and the flux density can be detected easily by the digital Hall IC 21 and the linear Hall IC 22 compared with when the metal plate 19 is not provided.

At the same time, since the digital Hall IC 21 and the linear Hall IC 22 are disposed between the metal plate 19 and the magnetic substance, the magnetic flux from the outside is shut off by the metal plate 19 and scarcely reaches the digital Hall IC 21 and the linear Hall IC 22, preventing malfunction or the like easily.

Although in the foregoing embodiment, the digital Hall IC 21 detects the flux density below a threshold at the opening θ1 of the accelerator 11, and after the condition is reached in which no detection signal is outputted, the accelerator is rotated further to output the detection signal from the linear Hall IC 22 after the opening reaches θ2, the present embodiment can be arranged such that the detection signal of the linear Hall IC 22 is outputted after the accelerator 11 reaches a position of the opening θ1 at which subsequent output of the detection signal from the linear Hall IC 22 is stopped. Also, the present embodiment can be arranged such that the detection signal of the linear Hall IC 22 is outputted at a position where the accelerator 11 reaches an opening smaller than the opening θ1. In this case, control is performed such that the detection value from the linear Hall IC 22 is offset-operated at the position of the opening θ1.

The description above discloses (amongst others) a relative position detection-and-control device having a first and a second member capable of relative displacement to each other from a reference position, the first member having at least one magnetic substance fixed thereto for generating a continuous magnetic field for detection and the second member having a detection section fixed thereto for detecting a flux density of the magnetic field formed by the magnetic substance to output a detection signal, for outputting a control signal from a control section based on the detection signal at a relative position of the first member to the second member, wherein the detection section has a first Hall IC and a second Hall IC fixed in the magnetic field for detection in a non-contact relation with the magnetic substance, the first Hall IC being capable of outputting a first detection signal indicative of the reference position and the second Hall IC being capable of outputting a second detection signal changing in response to change of the magnetic flux density; and wherein the control section outputs the control signal corresponding to the reference position in a condition in which the first detection signal indicates the reference position and outputs the control signal corresponding to the second detection signal in the condition in which the first detection signal does not indicate the reference position.

In addition to the arrangement as set forth in this embodiment, preferably the first Hall IC is a digital Hall IC.

Accordingly, with both of the embodiments described directly above, a control signal corresponding to the reference position is outputted in a condition in which the first detection signal indicates the reference position and a control signal corresponding to the second detection signal is outputted from the control section in the condition in which the first detection signal does not indicate the reference position. Therefore, in the condition in which the first and the second member are disposed at the reference position, if no first detection signal indicative of the reference position is outputted from the first Hall IC as a result of malfunction or the like, or even if the second detection signal corresponding to the position of relative displacement is outputted from the second Hall IC as a result of malfunction or the like, a control signal corresponding to the reference position is outputted from the control section, so that no control signal based on malfunction or the like is outputted to the controlled object, thereby preventing malfunction of the controlled object easily.

Further, if a magnetic substance is fixed to one of the first and the second member capable of relative displacement to each other and two Hall ICs are fixed in the same magnetic field for detection formed by the magnetic substance in a non-contact relation, independent two detection signals can be obtained to be outputted from the control section, so that no potentiometer or the like used in a conventional system is required, disadvantages of the mechanical switch can be overcome, and a relative position detection-and-control device capable of preventing malfunction easily as described above, can be constructed compactly at a low cost.

In addition to the arrangements as set forth above, preferably the magnetic substance is configured such that an N-pole and an S-pole are disposed side by side in the direction in which the first member and the second member are displaced relative to each other.

Accordingly, the magnetic substance is configured such that its N-pole and S-pole are arranged side by side in the direction in which the first member and the second member are displaced relative to each other. Therefore, change in the direction of magnetic lines is large between the N-pole and the S-pole, so that the position can be detected easily as a reference position by the first Hall IC.

In addition to the arrangements as set forth above, preferably the first member and the second member are displaced relative to each other between a reference position and a maximum displacement position, and the magnetic substance and the second Hall IC are fixed to the first member and the second member such that the second Hall IC is disposed within a range in which the flux density of the magnetic field for detection changes monotonously.

Accordingly, the first member and the second member are displaced relative to each other between a reference position and a maximum displacement position, and the magnetic substance and the second Hall IC are fixed to the first member and the second member such that the second Hall IC is disposed within a range in which the flux density of the magnetic field for detection changes monotonously. Therefore, if the first member and the second member are displaced relative to each other, a monotonously changing detection signal can be produced easily and a control signal corresponding to the amount of displacement of the first member to the second member can be outputted easily from the control section.

In addition to the arrangements as set forth above, the controller preferably comprises a magnetic metal plate disposed separate from and opposite the magnetic substance, wherein the first Hall IC and the second Hall IC are disposed between the magnetic metal plate and the magnetic substance.

Accordingly, a magnetic metal plate is provided which is disposed separate from and opposite the magnetic substance, and the first Hall IC and the second Hall IC are disposed between the metal plate and the magnetic substance. Therefore, the flux of the magnetic field for detection formed by the magnetic substance can be collected toward the metal plate, so that the magnetic flux can be detected easily by the first Hall IC and the second Hall IC, compared with when there is provided no metal plate. At the same time, since the first Hall IC and the second Hall IC are disposed between the metal plate and the magnetic substance, the magnetic flux from the outside is shut off by the metal plate and scarcely reaches to the first Hall IC and the second Hall IC, preventing malfunction or the like easily.

The description further discloses an embodiment of an astride riding type vehicle to which the preferred relative position detection-and-control device, as set forth above, is mounted for the control of accelerator opening, wherein one of the magnetic substance and the detection section is fixed to a handlebar and the other to an accelerator grip mounted for rotation about the handlebar, and the relative position detection-and-control device is mounted in such a manner that a completely-closed position of the accelerator grip is defined as the reference position.

Accordingly, the foregoing relative position detection-and-control device is mounted in which a completely-closed position of the accelerator grip is defined as the reference position. Therefore, even if the first Hall IC or the second Hall IC outputs a detection signal indicative of the position of displacement as a result of malfunction or the like at the completely-closed position of the accelerator grip, a control signal corresponding to the reference position is outputted from the control section and accelerator opening can be controlled in response to the completely-closed position, preventing malfunction of the drive source easily.

Further, since the drive source can be controlled if a magnetic substance and at least two Hall ICs are fixed to the handlebar and the accelerator grip, respectively, to allow the control signal to be outputted from the control section, no potentiometer or the like, used in a conventional system, is required, resulting in a compact arrangement, and a relative position detection-and-control device can also be provided around the accelerator grip. Further, no wires or the like for connecting the accelerator grip and the potentiometer are also needed, so that the quality of external appearance can be improved easily and the number of parts and human-hours for assembling can be kept small.

The description further discloses an embodiment of an astride riding type vehicle to which the preferred relative position detection-and-control device, as set forth above, is mounted for the control of accelerator opening, characterized in that the detection section is fixed to a handlebar, the magnetic substance is formed integral with a tube guide section of an accelerator grip mounted on the handlebar for rotation, and the relative position detection-and-control device is mounted in such a manner that a completely-closed position of the accelerator grip is defined as the reference position.

Accordingly, in addition to the foregoing effects, since the magnetic substance is formed integral with the tube guide section of the accelerator grip mounted on the handlebar for rotation, the magnetic substance can be disposed easily.

Within the description above, in order to provide a relative position detection-and-control device capable of preventing malfunction easily and constructed compactly at a low cost, there is preferably provided a relative position detection-and-control device comprises first and second members 11, 12 capable of relative displacement, the first member 11 having a magnetic substance 17 for generating a magnetic field for detection fixed thereto and the second member having a detection section 20 for detecting the flux density of the magnetic field for detection to output a detection signal fixed thereto, and a control section 14 for detecting the displacement between the first member 11 and the second member12 to output a control signal based on the detection signal, wherein the detection section 20 is provided with at least first and second Hall ICs 21, 22 fixed in the same magnetic field for detection in a non-contact relation with the magnetic substance 17, the first Hall IC 21 is capable of outputting a first detection signal indicative of a reference position, the second Hall IC 22 is capable of outputting a second detection signal changing in response to change in the flux density, and the control section 14 is capable of outputting a control signal corresponding to the reference position when the first detection signal indicates the reference position and in the case other than that, capable of outputting a control signal corresponding to the second detection signal.

## Claims

1. Accelerator of an astride-riding type vehicle, having a controller having first and second members (11,12) being rotatable relative to each other starting from a reference position (θ0), and having a detection section (13) for detecting a property of a magnetic field to output a control signal representative of the relative position of the first and second members (11,12),
the detection section (13) having a first Hall effect sensor (21) and a second Hall effect sensor (22) fixed in the magnetic field for detection,
the first Hall effect sensor (21) being capable of outputting a first detection signal indicative of the reference position, and
the second Hall effect sensor (22) being capable of outputting a second detection signal changing in response to a change of the magnetic flux density,
the control section being configured to output a first control signal (**V11**) corresponding to the reference position in a condition, in which the first detection signal indicates a position between a completely closed state (θ0) as the reference position and a given opening (θ1), and
the control section is configured to output a second control signal (V2θ) corresponding to the second detection signal in a condition, in which the first detection signal indicates a position larger than the given opening (θ1).

2. Accelerator according to claim 1, wherein the first member (11) has at least one magnetic substance (17) fixed thereto for generating a continuous magnetic field for detection, wherein the second member (12) has the detection section (13) fixed thereto for detecting a flux density of the magnetic field formed by the magnetic substance (17) to output the detection signal, for outputting the control signal from a control section (14) based on the detection signal at a relative position of the first member (11) to the second member (12).

3. Accelerator according to claim 1 or 2, wherein the first Hall effect sensor (21) is a digital Hall IC.

4. Accelerator according to one of the claims 1 to 3, wherein the magnetic substance (17) is configured such that an N-pole and an S-pole are disposed side-by-side in the direction, in which the first member (11) and the second member (12) are displaced relative to each other.

5. Accelerator according to one of the claims 1 to 4, wherein the first member (11) and the second member (12) are displaced relative to each other between the reference position (θ0) and a maximum displacement position (θm).

6. Accelerator according to one of the claims 2 to 4, wherein the magnetic substance (17) and the second Hall effect sensor (22) are fixed to the first member (11) and the second member (12) such that the second Hall effect sensor (22) is disposed within a range, in which the flux density of the magnetic field for detection changes monotonously.

7. Accelerator according to one of the claims 1 to 5, comprising a magnetic metal plate (19) disposed separate from and opposite the magnetic substance (17), wherein the first Hall effect sensor (21) and the second Hall effect sensor (22) are disposed between the magnetic metal plate (19) and the magnetic substance (17).

8. Astride riding type vehicle comprising an accelerator according to one of claims 2 through 7, wherein one of the magnetic substance (17) and the detection section (13) is fixed to a handlebar (10) and the other to an accelerator grip (11) mounted for rotation about the handlebar (10), and the controller is mounted in such a manner that the completely-closed position (θ0) of the accelerator grip (11) is defined as the reference position.

9. Astride riding type vehicle comprising an accelerator according to one of claims 2 through 7, wherein the detection section (13) is fixed to a handlebar (10), the magnetic substance (17) is formed integral with a tube guide section (11a) of an accelerator grip (11) mounted on the handlebar for rotation, and the relative position detection-and-control device is mounted in such a manner that the completely-closed position (θ0) of the accelerator grip (11) is defined as the reference position.

## Patentansprüche

1. Beschleuniger eines Fahrzeuges vom Grätschsitz- Typ mit einer Steuereinrichtung, die erste und zweite Teile (11, 12) hat, die relativ zueinander drehbar sind, startend von einer Bezugsposition (90) und die einen Erfassungsabschnitt (13) zum Erfassen einer Eigenschaft eines Magnetfeldes haben, um ein Steuersignal auszugeben, das die relative Position des ersten und zweiten Teiles (11, 12) repräsentiert,
wobei der Erfassungsabschnitt (13) einen ersten Hall- Effekt- Sensor (21) und einen zweiten Hall- Effekt- Sensor (22), befestigt in dem Magnetfeld zum Erfassen, hat,
der erste Hall- Effekt- Sensor (21) in der Lage ist, ein erstes Erfassungssignal auszugeben, das die Bezugsposition anzeigt, und
der zweite Hall- Effekt- Sensor (22) in der Lage ist, ein zweites Erfassungssignal auszugeben, das sich in Abhängigkeit von einer Veränderung der magnetischen Flussdichte verändert,
der Steuerabschnitt konfiguriert ist, ein erstes Steuersignal (V11) auszugeben, das der Bezugsposition in einem Zustand entspricht, in dem das erste Erfassungssignal eine Position zwischen einem vollständig geschlossenen Zustand (θ0) als der Bezugsposition und einer gegebenen Öffnung (θ1) anzeigt, und
der Steuerabschnitt konfiguriert ist, ein zweites Steuersignal (V2θ) auszugeben, das dem zweiten Erfassungssignal in einem Zustand entspricht, in dem das erste Erfassungssignal eine Position größer als die gegebene Öffnung (θ1) anzeigt.

2. Beschleuniger nach Anspruch 1, wobei das erste Teil (11) zumindest eine magnetische Substanz (17) hat, an diesem befestigt, um ein kontinuierliches Magnetfeld zur Erfassung zu erzeugen, wobei das zweite Teil (12) den Erfassungsabschnitt (13) an diesem befestigt hat, um eine Flussdichte des Magnetfeldes, gebildet durch die magnetische Substanz (17), zu erfassen, um ein Erfassungssignal auszugeben, zum Ausgeben des Steuersignals aus einem Steuerabschnitt (14) auf der Grundlage des Erfassungssignals bei einer relativen Position des ersten Teils (11) zu dem zweiten Teil (12).

3. Beschleuniger nach Anspruch 1 oder 2, wobei der erste Hall- Effekt- Sensor (21) ein digitaler Hall- IC ist.

4. Beschleuniger nach einem der Ansprüche 1 bis 3, wobei die magnetische Substanz (17) konfiguriert ist derart, dass ein N- Pol und ein S- Pol nebeneinander in der Richtung angeordnet sind, in der das erste Teil (11) und das zweite Teil (12) relativ zueinander verlagert sind.

5. Beschleuniger nach einem der Ansprüche 1 bis 4, wobei das erste Teil (11) und das zweite Teil (12) relativ zueinander zwischen der Referenzposition (θ0) und einer maximalen Verlagerungsposition (θm) verlagert sind.

6. Beschleuniger nach einem der Ansprüche 2 bis 4, wobei die magnetische Substanz (17) und der zweite Hall- Effekt- Sensor (22) an dem ersten Teil (11) und dem zweiten Teil (12) befestigt sind derart, dass der zweite Hall- Effekt- Sensor (22) innerhalb eines Bereiches angeordnet ist, in dem sich die Flussdichte des Magnetfeldes zur Erfassung monoton verändert.

7. Beschleuniger nach einem der Ansprüche 1 bis 5, aufweisend eine magnetische Metallplatte (19), angeordnet separat von und gegenüberliegend zu der magnetischen Substanz (17), wobei der erste Hall- Effekt- Sensor (21) und der zweite Hall- Effekt- Sensor (22) zwischen der magnetischen Metallplatte (19) und der magnetischen Substanz (17) angeordnet sind.

8. Fahrzeug vom Grätschsitz- Typ, aufweisend einen Beschleuniger, nach einem der Ansprüche 2 bis 7, wobei eines von magnetischer Substanz (17) oder Erfassungsabschnitt (13) an einer Lenkstange (10) und der andere an einem Beschleunigergriff (11), montiert zur Drehung um die Lenkstange (10), befestigt ist und die Steuereinrichtung in solch einer Weise montiert ist, dass die vollständig geschlossene Position (θ0) des Beschleunigergriffs (11) als die Bezugsposition definiert ist.

9. Fahrzeug vom Grätschsitz- Typ, aufweisend einen Beschleuniger, nach einem der Ansprüche 2 bis 7, wobei der Erfassungsabschnitt (13) an einer Lenkstange (10) befestigt ist, die magnetische Substanz (17) einstückig gebildet ist mit einem Rohrführungsabschnitt (11 a) eines Beschleunigergriffs (11), zur Rotation montiert an der Lenkstange, und der die relative Position- Erfassungs- und- Steuervorrichtung montiert ist derart, dass die vollständig geschlossenen Position (θ0) des Beschleunigergriffs (11) als die Bezugsposition definiert ist.

## Revendications

1. Accélérateur d'un véhicule de type monté à califourchon, comportant un contrôleur comportant des premier et deuxième éléments (11, 12) capables de tourner l'un par rapport à l'autre en commençant à une position de référence (θ0), et comportant une section de détection (13) pour détecter une propriété d'un champ magnétique pour délivrer un signal de commande représentatif de la position relative des premier et deuxième éléments (11, 12),
la section de détection (13) comportant un premier capteur à effet Hall (21) et un deuxième capteur à effet Hall (22) fixés dans le champ magnétique pour une détection,
le premier capteur à effet Hall (21) étant capable de délivrer un premier signal de détection indicatif de la position de référence, et
le deuxième capteur à effet Hall (22) étant capable de délivrer un deuxième signal de détection variant en réponse à une variation de la densité de flux magnétique,
la section de commande étant configurée pour délivrer un premier signal de commande (V11) correspondant à la position de référence dans une condition dans laquelle le premier signal de détection indique une position entre un état complètement fermé (θ0) en tant que position de référence et une ouverture donnée (θ1), et
la section de commande est configurée pour délivrer un deuxième signal de commande (V2θ) correspondant au deuxième signal de détection dans une condition dans laquelle le premier signal de détection indique une position plus grande que l'ouverture donnée (θ1).

2. Accélérateur selon la revendication 1, dans lequel au moins une substance magnétique (17) est fixée au premier élément (11) pour générer un champ magnétique continu pour une détection, dans lequel la section de détection (13) est fixée au deuxième élément (12) pour détecter une densité de flux du champ magnétique formé par la substance magnétique (17) pour délivrer le signal de détection, pour délivrer le signal de commande à partir d'une section de commande (14) sur la base du signal de détection à une position relative du premier élément (11) par rapport au deuxième élément (12).

3. Accélérateur selon la revendication 1 ou 2, dans lequel le premier capteur à effet Hall (21) est un circuit intégré à effet Hall numérique.

4. Accélérateur selon l'une des revendications 1 à 3, dans lequel la substance magnétique (17) est configurée de sorte qu'un pôle N et un pôle S soient disposés côte à côte dans la direction dans laquelle le premier élément (11) et le deuxième élément (12) sont décalés l'un par rapport à l'autre.

5. Accélérateur selon l'une des revendications 1 à 4, dans lequel le premier élément (11) et le deuxième élément (12) sont décalés l'un par rapport à l'autre entre la position de référence (θ0) et une position de déplacement maximum (θm).

6. Accélérateur selon l'une des revendications 2 à 4, dans lequel la substance magnétique (17) et le deuxième capteur à effet Hall (22) sont fixés au premier élément (11) et au deuxième élément (12) de sorte que le deuxième capteur à effet Hall (22) est disposé dans une plage dans laquelle la densité de flux du champ magnétique pour une détection varie de façon monotone.

7. Accélérateur selon l'une des revendications 1 à 5, comprenant une plaque métallique magnétique (19) disposée séparément de la substance magnétique (17) et face à celle-ci, dans lequel le premier capteur à effet Hall (21) et le deuxième capteur à effet Hall (22) sont disposés entre la plaque métallique magnétique (19) et la substance magnétique (17).

8. Véhicule de type monté à califourchon comprenant un accélérateur selon l'une des revendications 2 à 7, dans lequel l'une de la substance magnétique (17) et de la section de détection (13) est fixée à un guidon (10) et l'autre à une poignée d'accélérateur (11) montée pour tourner autour du guidon (10), et le contrôleur est monté de manière à ce que la position complètement fermée (θ0) de la poignée d'accélérateur (11) soit définie en tant que position de référence.

9. Véhicule de type monté à califourchon comprenant un accélérateur selon l'une des revendications 2 à 7, dans lequel la section de détection (13) est fixée à un guidon (10), la substance magnétique (17) est formée d'un seul tenant avec une section de guidage de tube (11a) d'une poignée d'accélérateur (11) montée en rotation sur le guidon, et le dispositif de détection et de commande de position relative est monté de manière à ce que la position complètement fermée (θ0) de la poignée d'accélérateur (11) soit définie en tant que position de référence.
